# EUROPEAN PATENT APPLICATION

(11) **EP 3 196 864 A1**
(43) Date of publication of application: **26.07.2017**
(21) Application number: 15842372.3
(22) Date of filing: 15.09.2015
(51) Int. Cl.: G09F 9/00, G02F 1/1333

(54) **DISPLAY DEVICE**

(30) Priority: 19.09.2014 JP 2014190816
(71) Applicant: Panasonic Intellectual Property Management Co., Ltd., Osaka-shi, Osaka 540-6207 (JP)
(72) Inventor: UEDA, Takuya, Osaka 540-6207 (JP); OKUZUMI, Tomoya, Osaka 540-6207 (JP); KITAJIMA, Norihito, Osaka 540-6207 (JP)
(74) Representative: Schwabe - Sandmair - Marx
(86) International application number: PCT/JP2015/004686
(87) International publication number: WO 2016/042755

(57) **Abstract**

A display device includes a panel, a monitor, a cover lens, a monitor fixing member, an adhesive member, and a filling member. The monitor includes a first surface and a second surface opposite to the first surface. The cover lens has an expansion coefficient differing from an expansion coefficient of the monitor by not less than a threshold. The monitor fixing member fixes the first surface of the monitor and the panel. The adhesive member bonds the second surface of the monitor and the cover lens together. The filling member is filled between the second surface of the monitor and the cover lens. The adhesive member is frame-shaped and disposed on the cover lens externally of a section where the filling member is disposed.

## Description

### TECHNICAL FIELD

The present invention relates to a display device and more particularly, to a display device including a monitor.

### BACKGROUND ART

A touch panel module includes a cover lens made of glass, a monitor formed of glass, an optical adhesive bonding the cover lens and the monitor together, and a seal material fixing the cover lens and the monitor (refer to, for example, PTL 1).

### Citation List

### Patent Literature

PTL 1: Unexamined Japanese Patent Publication No. 2013-148951

### SUMMARY OF THE INVENTION

The present invention provides a display device minimizing separation of a cover lens and a monitor that have greatly different thermal expansion coefficients, respectively.

A display device according to an aspect of the present invention includes a panel, a monitor, a cover lens, a monitor fixing member, an adhesive member, and a filling member. The monitor includes a first surface, and a second surface opposite to the first surface. The cover lens has an expansion coefficient differing from an expansion coefficient of the monitor by not less than a threshold. The monitor fixing member fixes the first surface of the monitor and the panel. The adhesive member bonds the second surface of the monitor and the cover lens together. The filling member is filled between the second surface of the monitor and the cover lens. The adhesive member is frame-shaped and disposed on the cover lens externally of a section where the filling member is disposed.

A display device according to another aspect of the present invention includes a panel, a monitor, a cover lens, a monitor fixing member, a filling member, and a cover lens fixing member. The monitor includes a first surface and a second surface opposite to the first surface. The cover lens has an expansion coefficient differing from an expansion coefficient of the monitor by not less than a threshold. The cover lens faces the panel externally of an outer edge of the monitor. The monitor fixing member fixes the first surface of the monitor and the panel. The filling member is filled between the second surface of the monitor and the cover lens. The cover lens fixing member fixes the cover lens and the panel at a section where the cover lens and the panel face each other. The cover lens fixing member is frame-shaped and disposed on the cover lens externally of a section where the filling member is disposed.

According to the present invention, separation of a cover lens and a monitor that have greatly different thermal expansion coefficients, respectively can be minimized.

### BRIEF DESCRIPTION OF DRAWINGS

FIG. 1 is an external view of, as seen from a rear side, an interior of a vehicle mounted with a display device according to an exemplary embodiment of the present invention.
FIG. 2 is an external view in perspective of the display device of FIG. 1.
FIG. 3 is an exploded perspective view of the display device of FIG. 2.
FIG. 4A is a fragmentary sectional view of the display device of FIG. 3.
FIG. 4B is an enlarged view of a portion of FIG. 4A.
FIG. 5A illustrates stress on a portion of the display device of FIG. 4A.
FIG. 5B illustrates stress on a portion of the display device of FIG. 4A.
FIG. 5C illustrates stress on a portion of the display device of FIG. 4A.

### DESCRIPTION OF EMBODIMENT

Prior to a description of an exemplary embodiment of the present invention, a brief description is provided of a problem of a conventional display device. For protection of an occupant in a collision, a display device mounted to a vehicle has a cover lens that is not made of glass, but resin. In a case where the cover glass is made of the resin, in high-temperature and low-temperature environments required of the display device as an in-vehicle device, thermal contraction with respect to a monitor formed of glass causes stress to be applied to an optical adhesive, whereby the cover glass comes off easily.

The exemplary embodiment of the present invention is described hereinafter with reference to the accompanying drawings. Before that, the exemplary embodiment is outlined. The present exemplary embodiment relates to a display device mounted to a vehicle. This display device has a monitor sandwiched between a panel and a cover lens with the cover lens disposed to face a driver seat. The cover lens and the monitor are bonded together by an Optical Clear Adhesive (OCA such as optical clear double-sided adhesive tape) or an Optically Clear Resin (OCR such as ultraviolet (UV) curable resin, thermosetting resin or two-part curing resin) that is filled therebetween. As mentioned earlier, the cover lens is made of resin when mounted to the vehicle. The monitor is formed of glass. Meanwhile, a vehicle interior is estimated to have changes in temperature across a range from -40°C to 85°C. When the resin and the glass are subjected to such temperature changes, relative positions of the cover lens and the monitor change due to a difference between respective expansion coefficients of the resin and the glass.

Stress is thus applied to the OCA or the OCR in a direction that varies according to temperature, and as a result, the cover lens can possibly come off. It is to be noted that conventionally, a monitor and a cover lens are merely fitted into the panel and are not fixed. To cope with this, the display device according to the present exemplary embodiment has the cover lens that is fixed to the panel by a double-sided adhesive tape while being fixed to the monitor by another double-sided adhesive tape, and the monitor is fixed to the panel by a double-sided adhesive tape.

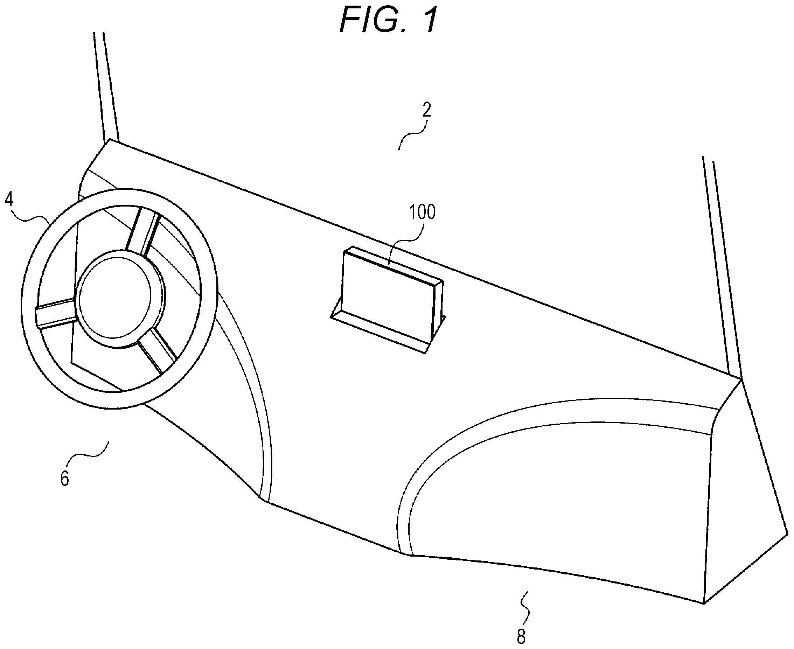

FIG. 1 is an external view of, as seen from a rear side, the interior of the vehicle mounted with display device 100 according to the exemplary embodiment of the present invention. The vehicle interior has, at its front, driver seat 6 disposed on its left side, passenger seat 8 disposed on its right side, and steering wheel 4 disposed in front of driver seat 6. It is to be noted that although steering wheel 4 and driver seat 6 are disposed on the left side in FIG. 1, steering wheel 4 and driver seat 6 may be disposed on the right side. In front of steering wheel 4, windshield 2 is disposed. Display device 100 is placed side by side with steering wheel 4, that is, for example, on a center console, which is on a right side of steering wheel 4. Display device 100 displays, for example, an image of a car navigation system.

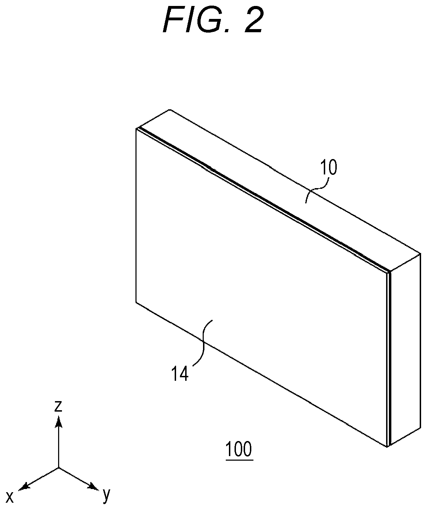

FIG. 2 is an external view in perspective of display device 100. As shown in FIG. 2, a Cartesian coordinate system including an x-axis, a y-axis and a z-axis is defined. The y- and z-axes are mutually orthogonal in a plane of display device 100. The x-axis is perpendicular to the y- and z-axes and extends in a thickness direction of display device 100. The x-, y- and z-axes have respective positive directions defined by respective arrows in FIG. 2 and respective negative directions defined by respective directions reverse to the arrows. Here, the positive direction of the x-axis is a direction toward driver seat 6 and passenger seat 8 in FIG. 1 and is also referred to as a "front side", while the negative direction of the x-axis is a direction toward windshield 2 in FIG. 1 and is also referred to as a "rear side". Moreover, the positive direction of the z-axis is referred to as an "upper side", while the negative direction of the z-axis is referred to as a "lower side".

Display device 100 includes panel 10 and cover lens 14. Panel 10 is disposed on the rear side, while cover lens 14 is disposed on the front side. A monitor, which is not shown, is sandwiched between panel 10 and cover lens 14. Details of panel 10 and cover lens 14 are described later.

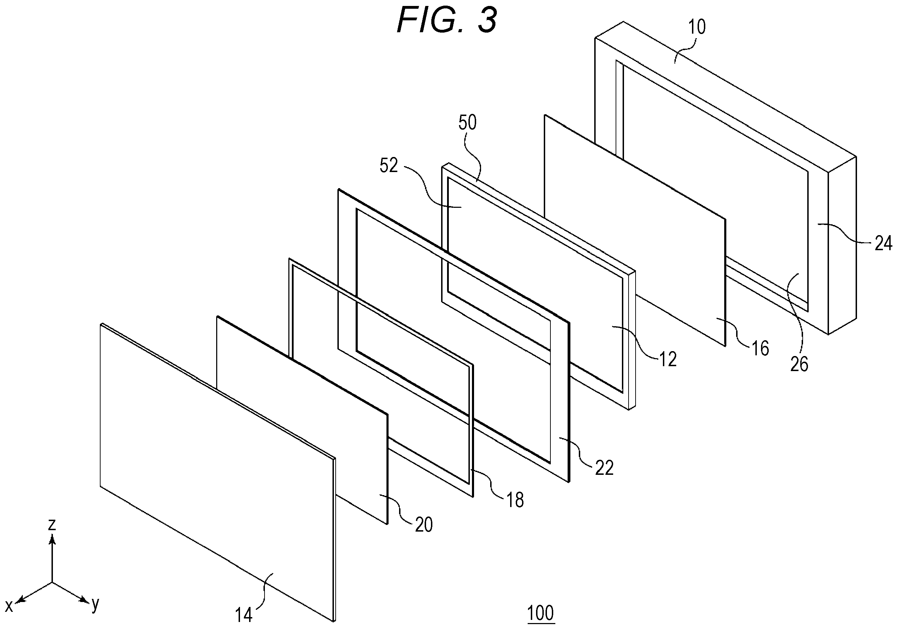

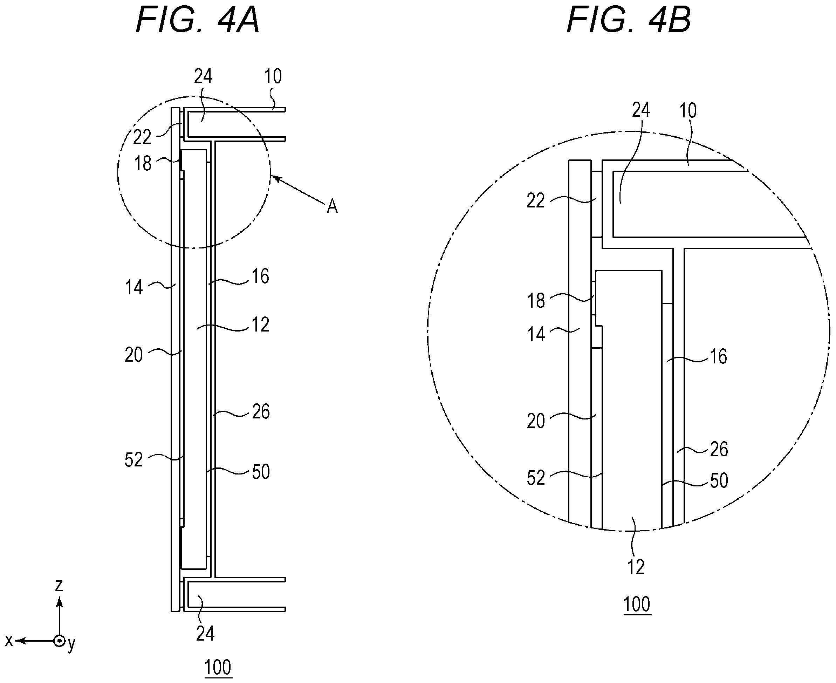

FIG. 3 is an exploded perspective view illustrating a configuration of display device 100. FIGS. 4A and 4B are sectional views illustrating the configuration of display device 100. FIG. 4A is a sectional view of display device 100 of FIG. 3 in an x-z plane, and FIG. 4B is an enlarged view of portion A in FIG. 4A. Display device 100 includes panel 10, monitor 12, cover lens 14, monitor fixing member 16, adhesive member 18, filling member 20, and cover lens fixing member 22. Further, panel 10 includes projection 24 and base 26.

Panel 10 is rectangular in the y-z plane and supports display device 100 from the rear side. In the y-z plane of panel 10, projection 24 is shaped as a rectangular frame and disposed along an outer edge of panel 10, while base 26 is rectangular and is disposed inside projection 24. As compared with base 26, projection 24 projects toward the front side. Panel 10 is made of resin but may be made of metal.

Monitor 12 is plate-shaped. Monitor 12 notably has a smaller rectangular shape than base 26 in the y-z plane and a thickness equal to a thickness of projection 24 in the x direction. Monitor 12 is, for example, a Liquid Crystal Display (LCD) and has, for example, a polarizing filter, an array substrate, a liquid crystal layer, a color filter substrate, and a polarizing filter that are arranged in this order in a direction from the rear side toward the front side. In this case, the array substrate and the color filter substrate are made of glass. It is to be noted that a rear surface of monitor 12 is first surface 50, while a front surface of monitor 12 is second surface 52. First surface 50 and second surface 52 thus face in the opposite directions.

Monitor fixing member 16 is, for example, the double-sided adhesive tape and fixes first surface 50 of monitor 12 and base 26 of panel 10. Here, the double-sided adhesive tape is of a foam substrate type having higher flexibility than a nonwoven fabric substrate type and has a thickness of, for example, 0.4 mm or more in the x direction. Further, in the y-z plane, monitor fixing member 16 has a smaller rectangular shape than monitor 12 and is, for example, centered on first surface 50 of monitor 12 and base 26 of panel 10.

Cover lens 14 is plate-shaped. In the y-z plane, cover lens 14 is notably larger than monitor 12 and equal in size to panel 10. For this reason, a rear surface of cover lens 14 and projection 24 of panel 10 face each other externally of an outer edge of monitor 12. In a case where display device 100 is capable of touch operation, cover lens 14 has a touch panel function. As mentioned before, cover lens 14 is made of the resin. This cover lens 14 has a linear expansion coefficient of, for example 6.5 × 10⁻⁵/°C, while monitor 12 has a linear expansion coefficient of, for example, 0.85 × 10⁻⁵/°C. Here, a threshold is twice the linear expansion coefficient of monitor 12. For this reason, the linear expansion coefficient of cover lens 14 differs from the linear expansion coefficient of monitor 12 by not less than the threshold. It is to be noted that cover lens 14 may be made of material other than the resin, and the threshold may be set to another value accordingly. Moreover, instead of the linear expansion coefficient, another expansion coefficient such as a volume expansion coefficient may be used for definition.

Filling member 20 is filled between second surface 52 of monitor 12 and the rear surface of cover lens 14. Filling member 20 is the OCA or the OCR. The OCA is a substrate-less adhesive tape structurally sandwiched between a light release separator and a heavy release separator. On the other hand, the OCR is reactive liquid resin cured by UV irradiation, heating or mixing of two liquids. It is to be noted that the OCR is classified as acrylic-based or silicone-based. Filling member 20 is centered on second surface 52 of monitor 12 and the rear surface of cover lens 14.

Adhesive member 18 is, for example, the double-sided adhesive tape similar to monitor fixing member 16 and bonds second surface 52 of monitor 12 and the rear surface of cover lens 14 together. Adhesive member 18 is shaped as a rectangular frame, and its inner edge is larger in size than an outer edge of filling member 20, while its outer edge is smaller in size than the outer edge of monitor 12. For this reason, on second surface 52 of monitor 12 and the rear surface of cover lens 14, adhesive member 18 is disposed externally of a section where filling member 20 is disposed. Moreover, on the rear surface of cover lens 14, adhesive member 18 is disposed closer to the section where filling member 20 is disposed than a section where cover lens fixing member 22, which is described later, is disposed.

Cover lens fixing member 22 is the double-sided adhesive tape similar to monitor fixing member 16 and fixes the rear surface of cover lens 14 and projection 24 of panel 10. This cover lens fixing member 22 is shaped as a rectangular frame, and its inner edge is larger in size than the outer edge of adhesive member 18, while its outer edge is smaller in size than the outer edge of projection 24. For this reason, on the rear surface of cover lens 14, cover lens fixing member 22 is disposed away from the section where filling member 20 is disposed as compared with a section where adhesive member 18 is disposed. In other words, on the rear surface of cover lens 14, cover lens fixing member 22 is disposed externally of the section where filling member 20 is disposed. A summarized positional relationship among cover lens fixing member 22, filling member 20, and adhesive member 18 is such that adhesive member 18 is disposed to surround filling member 20, and cover lens fixing member 22 is disposed to surround adhesive member 18.

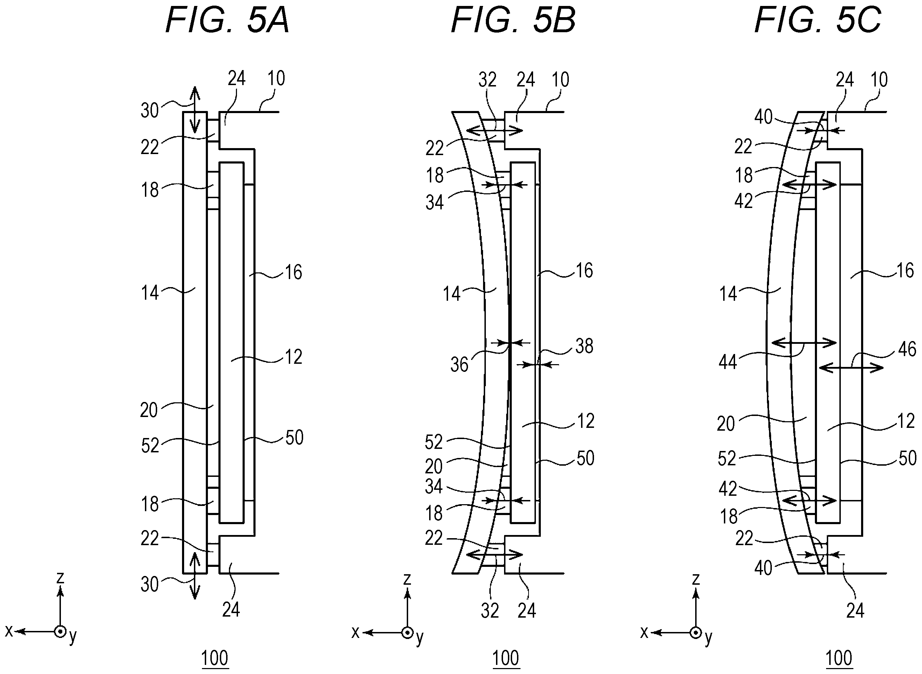

FIGS. 5A to 5C illustrate respective stresses on display device 100. These drawings refer to cases where cover lens 14 and monitor 12 expand and contract in response to, for example, the temperature changes. Here, only the expansion and contraction of cover lens 14 having the larger linear expansion coefficient are shown for plain explanation. FIG. 5A shows the case where cover lens 14 expands and contracts along the z-axis. In this case, first stress 30 acts on cover lens 14. First stress 30 acting along the z-axis is dispersed among filling member 20, adhesive member 18, and cover lens fixing member 22.

FIG. 5B shows the case where cover lens 14 is warped at a high temperature. In this case, a central portion of cover lens 14 is curved toward the rear side. Accordingly, second stress 32 acts to cause cover lens fixing member 22 to widen along the x-axis. Further, third stress 34 acts to cause adhesive member 18 to narrow along the x-axis, and fourth stress 36 acts to cause filling member 20 to narrow along the x-axis. Furthermore, fifth stress 38 acts to cause monitor fixing member 16 to narrow along the x-axis. Here, respective length variations of cover lens fixing member 22 and filling member 20 are each greater than a length variation of monitor fixing member 16 or a length variation of adhesive member 18.

FIG. 5C shows the case where cover lens 14 is warped at a low temperature. In this case, a central portion of cover lens 14 is curved toward the front side. Accordingly, sixth stress 40 acts to cause cover lens fixing member 22 to narrow along the x-axis. Further, seventh stress 42 acts to cause adhesive member 18 to widen along the x-axis, and eighth stress 44 acts to cause filling member 20 to widen along the x-axis. Furthermore, ninth stress 46 acts to cause monitor fixing member 16 to widen along the x-axis. Here also, respective length variations of cover lens fixing member 22 and filling member 20 are each greater than a length variation of monitor fixing member 16 or a length variation of adhesive member 18. At both the high and low temperatures, monitor fixing member 16 and adhesive member 18 each have the smaller length variations, thereby resulting in less deterioration. Thus, separation of cover lens 14 and monitor 12 is mainly minimized by monitor fixing member 16 and adhesive member 18.

According to the exemplary embodiment of the present invention, monitor fixing member 16 and adhesive member 18 are fixed to the respective surfaces of monitor 12, so that even when cover lens 14 and monitor 12 that have the greatly different thermal expansion coefficients, respectively expand or contract, the separation of cover lens 14 and monitor 12 can be minimized. Because cover lens fixing member 22 is fixed away from filing member 20 as compared with adhesive member 18, stress dispersion can be achieved when cover lens 14 and monitor 12 that have the greatly different thermal expansion coefficients, respectively expand or contract. With the stress dispersion, filling member 20, monitor fixing member 16, adhesive member 18, and cover lens fixing member 22 can be subjected to reduced stresses, respectively. Further, because monitor fixing member 16 and cover lens fixing member 22 are fixed to monitor 12 and cover lens 14, respectively, the separation of cover lens 14 and monitor 12 can be minimized even when cover lens 14 and monitor 12 that have the greatly different thermal expansion coefficients, respectively expand or contract. Furthermore, because adhesive member 18 is fixed between filling member 20 and cover lens fixing member 22, stress dispersion can be achieved when cover lens 14 and monitor 12 that have the greatly different thermal expansion coefficients, respectively expand or contract.

It is to be noted that the present exemplary embodiment is shown by way of example. Various modifications are possibly made to combinations of the components or processing processes and fall within the scope of the present invention.

In the present exemplary embodiment, cover lens fixing member 22 is used for fixing cover lens 14 and panel 10. However, the present invention is not limited to this and may, for example, omit fixing by cover lens fixing member 22. In that case, stress caused by expansion or contraction of cover lens 14 is dispersed among monitor fixing member 16, adhesive member 18, and filling member 20. According to this configuration, cover lens fixing member 22 is not included, so that the configuration can be simplified.

In the present exemplary embodiment, adhesive member 18 is used for fixing cover lens 14 and monitor 12. However, the present invention is not limited to this and may omit, for example, fixing by adhesive member 18. In that case, stress caused by expansion or contraction of cover lens 14 is dispersed among monitor fixing member 16, filling member 20, and cover lens fixing member 22. According to this configuration, adhesive member 18 is not included, so that the configuration can be simplified.

In the present exemplary embodiment, adhesive member 18 and cover lens fixing member 22 are frame-shaped. However, the present invention is not limited to this. For example, instead of being frame-shaped, at least one of adhesive member 18 and cover lens fixing member 22 may have another shape such as a linear shape. In such a case, among four sides surrounding filling member 20, the two sides which face each other may have two linear-shaped adhesive members 18 attached respectively, and it is to be noted that three or more such adhesive members 18 may be used. The same goes for cover lens fixing member 22. According to this configuration, adhesive member 18 or cover lens fixing member 22 can have an improved degree of freedom in shape.

In the present exemplary embodiment, monitor fixing member 16 and cover lens fixing member 22 are both the double-sided adhesive tapes. However, the present invention is not limited to this. For example, monitor fixing member 16 or cover lens fixing member 22 may not be the double-sided adhesive tape, but another fixing member such as a screw. According to this configuration, monitor fixing member 16 or cover lens fixing member 22 can structurally have an improved degree of freedom.

### INDUSTRIAL APPLICABILITY

A display device according to the present invention is an in-vehicle device useful under conditions where temperature changes greatly.

### REFERENCE MARKS IN THE DRAWINGS

- 2: windshield
- 4: steering wheel
- 6: driver seat
- 8: passenger seat
- 10: panel
- 12: monitor
- 14: cover lens
- 16: monitor fixing member
- 18: adhesive member
- 20: filling member
- 22: cover lens fixing member
- 24: projection
- 26: base
- 30: first stress
- 32: second stress
- 34: third stress
- 36: fourth stress
- 38: fifth stress
- 40: sixth stress
- 42: seventh stress
- 44: eighth stress
- 46: ninth stress
- 50: first surface
- 52: second surface
- 100: display device

## Claims

1. A display device comprising:
a panel;
a monitor including a first surface and a second surface opposite to the first surface;
a cover lens having an expansion coefficient differing from an expansion coefficient of the monitor by not less than a threshold;
a monitor fixing member for fixing the first surface of the monitor and the panel;
an adhesive member for bonding the second surface of the monitor and the cover lens together; and
a filling member filled between the second surface of the monitor and the cover lens,
wherein the adhesive member is frame-shaped and disposed on the cover lens externally of a section where the filling member is disposed.

2. The display device according to claim 1, wherein
the cover lens and the panel face each other externally of an outer edge of the monitor;
the display device further comprises a cover lens fixing member for fixing the cover lens and the panel at a section where the cover lens and the panel face each other; and
on the cover lens, the cover lens fixing member is disposed away from the section where the filling member is disposed as compared with a section where the adhesive member is disposed.

3. A display device comprising:
a panel;
a monitor including a first surface and a second surface opposite to the first surface;
a cover lens having an expansion coefficient differing from an expansion coefficient of the monitor by not less than a threshold, the cover lens facing the panel externally of an outer edge of the monitor;
a monitor fixing member for fixing the first surface of the monitor and the panel;
a filling member filled between the second surface of the monitor and the cover lens; and
a cover lens fixing member for fixing the cover lens and the panel at a section where the cover lens and the panel face each other,
wherein the cover lens fixing member is frame-shaped and disposed on the cover lens externally of a section where the filling member is disposed.

4. The display device according to claim 3, further comprising:
an adhesive member for bonding the second surface of the monitor and the cover lens together,
wherein on the cover lens, the adhesive member is disposed closer to the section where the filling member is disposed than to the section where the cover lens fixing member is disposed.
